Europäisches Patentamt

(19) European Patent Office

Office européen des brevets

(11) Publication number: 0 115 052
A2

# EUROPEAN PATENT APPLICATION

(21) Application number: 83113001.8

(22) Date of filing: 22.12.83

(51) Int. Cl.³: G 11 B 5/27

(30) Priority: 28.12.82 JP 227702/82

(43) Date of publication of application:
08.08.84 Bulletin 84/32

(84) Designated Contracting States:
DE FR GB IT

(71) Applicant: TOKYO SHIBAURA DENKI KABUSHIKI
KAISHA
72, Horikawa-cho Saiwai-ku
Kawasaki-shi Kanagawa-ken 210(JP)

(72) Inventor: Fujioka, Masahiko
807 Shinmeidai-Jutaka 2-5-33, Shinmeidai
Hamura-machi Nishitama-gun Tokyo(JP)

(74) Representative: Patentanwälte Henkel, Pfenning, Feiler,
Hänzel & Meinig
Möhlstrasse 37
D-8000 München 80(DE)

(54) Magnetic head device.

(57) A magnetic head device has a read/write head (12) and an erasing head (14). The read/write head has first and second recording/reproducing cores (16, 20). A read/write gap (22) is defined between gap defining end portions (19, 21) of the first and second recording/reproducing cores. The erasing head has first and second erasing cores (24, 28). Two erasing gaps (32) are defined between gap defining end portions (25, 29) of the first and second erasing cores. The gap defining end portions (19, 25) of the first recording/ reproducing core and the first erasing core are tapered.

FIG. 6

EP 0 115 052 A2

- 1 -

Magnetic head device

The present invention relates to a magnetic head device used in a magnetic disk apparatus.

Conventional magnetic head devices used in magnetic disk apparatuses, etc., are provided with a recording/reproducing head (hereinafter referred to as a read/write head) and a pair of erasing heads arranged on both sides thereof. According to one such prior art magnetic head device, parts of the two sides of each of data tracks recorded by the read/wirte head one a magnetic disk are erased by the pair of erasing heads. Thus, interference between each two adjacent data tracks is prevented.

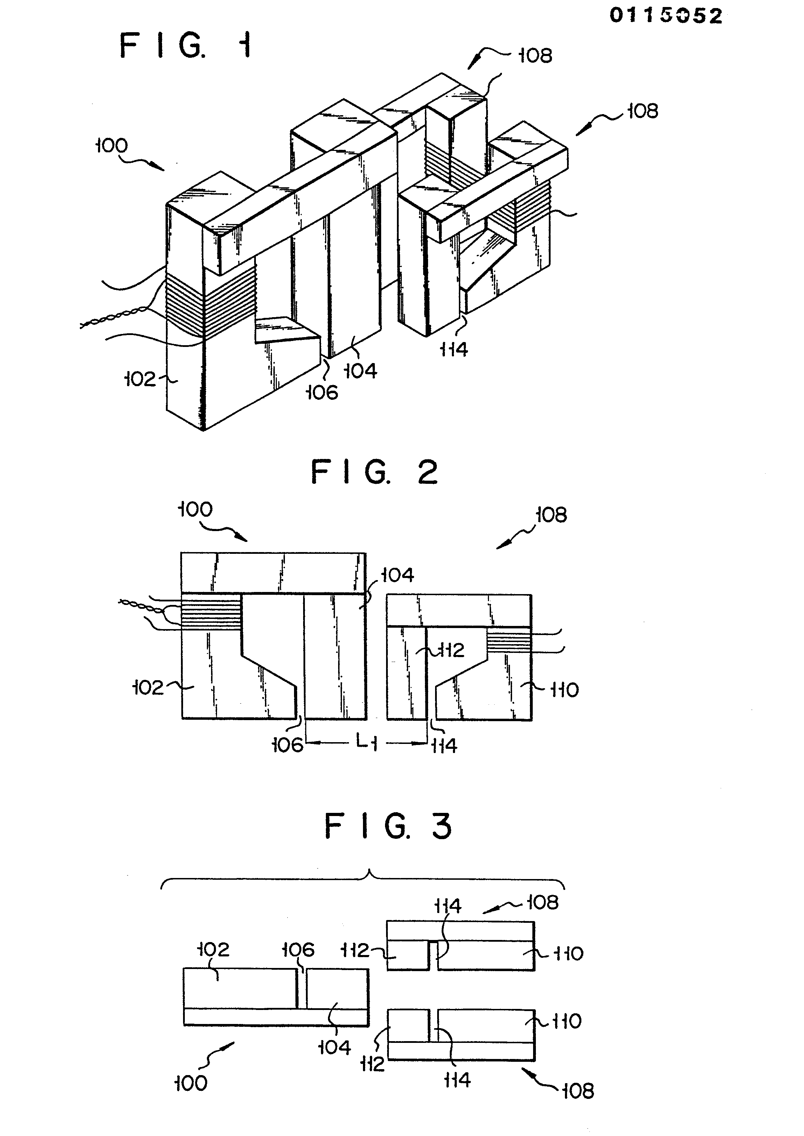

In the magnetic head device of this type, as shown in Figs. 1 to 3, a read/write head 100 comprises a core 102 wound with a coil and a core 104, between which a read/write gap 106 is defined. Each of two erasing heads 108 comprises a core 110 wound with a coil and a core 112, between which an erasing gap 114 is defined. Fig. 3 shows the relative positions of the read/write head 100 and the erasing heads 108. As shown in Fig. 3, the pair of erasing gaps 114 are arranged at a distance substantially equal to the width of the read/write gap 106, extending parallel to the read/write gap 106. The distance Ll between the read/write gap 106 and each erasing gap 114 is conventionally set to about 1.0 mm. The erasing gaps 114 need not always be parallel to the read/write gap 106, and may be inclined at an angle to the read/write gap 106.

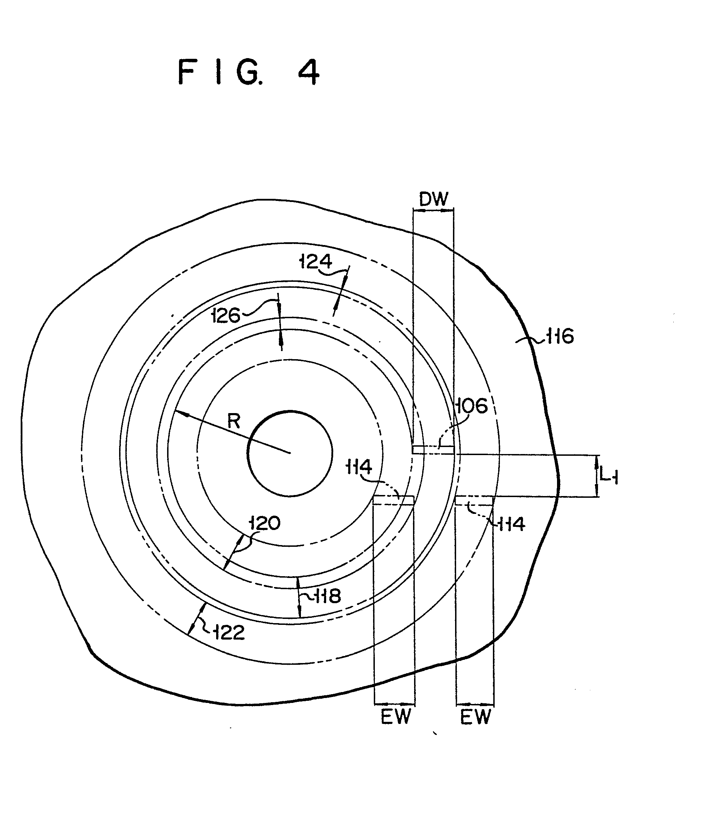

Fig. 4 shows a magnetic disk 116 on which data is recorded by the use of the prior art magnetic head device. In the state shown in Fig. 4, parts of both sides of the data are erased. A data recording region 118 is formed corresponding to the width DW of the read/write gap 106. Data erasing regions 120 and 122 are formed corresponding to the widths EW of the two erasing gaps 114, respectively. As mentioned before, the distance L1 is about 1.0 mm, which should be regarded as relatively long. Therefore, if the radius R of the inner periphery of the data recording region 118 is relatively short, an unerased region 124 and an over-erased region 126 will be formed in erasing the written data by the erasing heads 108. If the distance L1 is greater and if the radius R of the inner periphery of the recording region 118 and the width DW of the recording region 118 are shorter, then the extent of the regions 124 and 126 is increased in proportion. If the regions 124 and 126 are too wide, it is impossible to read the data from the data recording region 118.

One recording region 118 is usually divided into a multitude of sectors, and a gap with a predetermined width is provided between each two adjacent sectors. The width of the gap is usually equal to or greater than the distanc L1. Therefore, if the distance L1 between the read/write gap 106 and each erasing gap 114 is greater, then the width of the gaps between the sectors is increased in proportion. Thus, the number of sectors in each recording region is decreased, so that the recording capacity is reduced.

The present invention is contrived in consideration of these circumstances, and is intended to provide a magnetic head device in which the distance between a read/write gap and erasing gaps is reduced, so that the recording capacity of a magnetic disk can be increased, and that unerased and over-erased regions of data tracks can be reduced in area.

According to an aspect of the invention, there is provided a magnetic head device which comrises a read/write head for recording on or reproducing information from a magnetic recording medium, the read/write head including a first recording/reproducing core having a gap defining end portion, a second recording/reproducing core having a gap defining end portion directly facing the gap defining end portion of the first core, and a read/write gap defined between the respective gap defining end portions of the first and second recording/reproducing cores; and an erasing head for erasing parts of both side portions of each of data tracks recorded on the magnetic recording medium by the read/write head, the erasing head including a first erasing core adjoining the first recording/reproducing core and having a gap defining end portion, a second erasing core having a gap defining end portion directly facing the gap defining end portion of the first erasing core, and a pair of erasing gaps defined between the respective gap defining end portions of the first and second erasing cores, the two erasing gaps being spaced from each other at a distance substantially equal to the width of the read/write gaps, at least one of the respective gap defining end portions of the first recording/reproducing core and the first erasing core being tapered. Thus, since at least one of the respective gap defining end portions of the first recording/reproducing core and the first erasing core is tapered, the distance between the read/write gap and each erasing gap can be made much shorter than that of the prior art magnetic head device. Accordingly, unerased and over-erased regions of the data tracks formed by the erasing operation of the erasing head can greatly be reduced in area, ensuring a sufficient data track width. Also, the number of sectors in each data track can be increased for a larger data recording capacity.

This invention can be more fully understood from the following detailed description when taken in conjunction with the accompanying drawings, in which:

Figs. 1 to 4 show a prior art magnetic head device, in which Fig. 1 is a perspective view, Fig. 2 is a side view, Fig. 3 is a bottom view, and Fig. 4 is a schematic plan view showing a magnetic disk on which data is recorded by the magnetic head device;

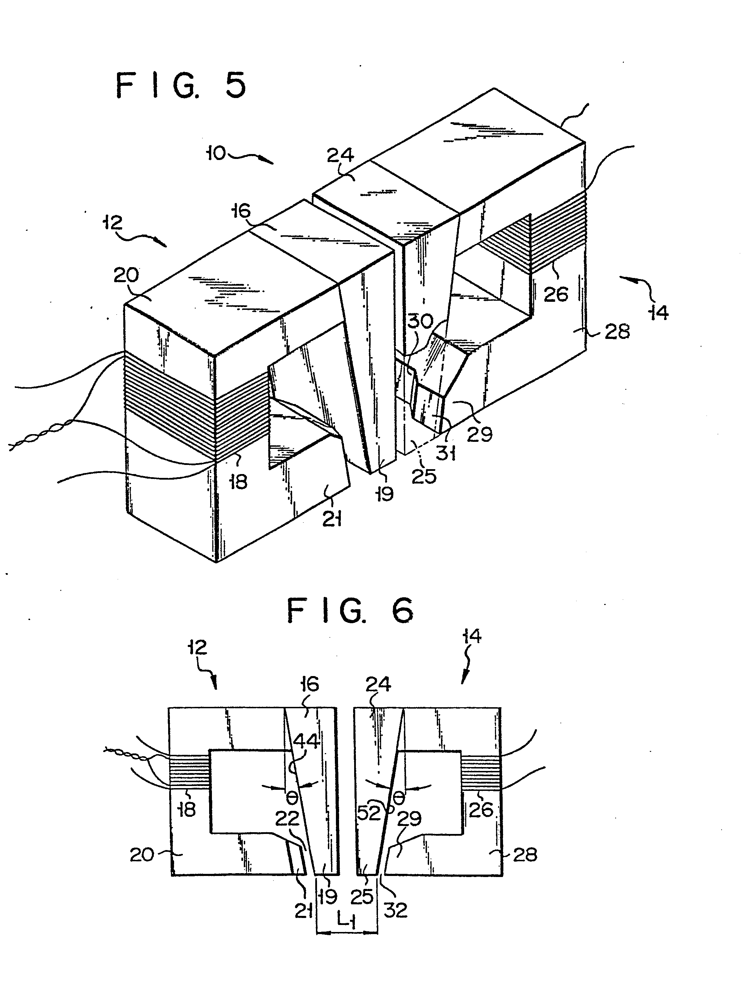

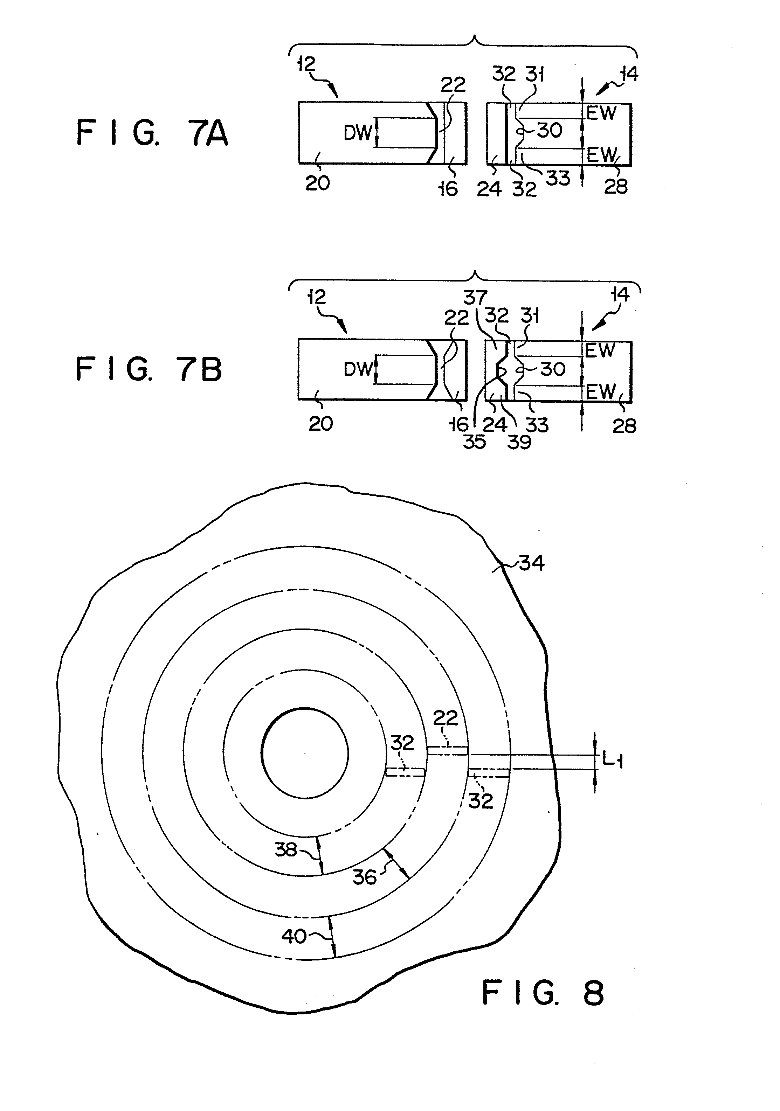

Figs. 5, 6, 7a and 8 show a magnetic head device according to one embodiment of the present invention, in which Fig. 5 is a perspective view, Fig. 6 is a side view, Fig. 7a is a bottom view, and Fig. 8 is a schematic plan view showing a magnetic disk on which data is recorded by the magnetic head device;

Fig. 7b is a bottom view showing a modification of the magnetic head device according to the first embodiment;

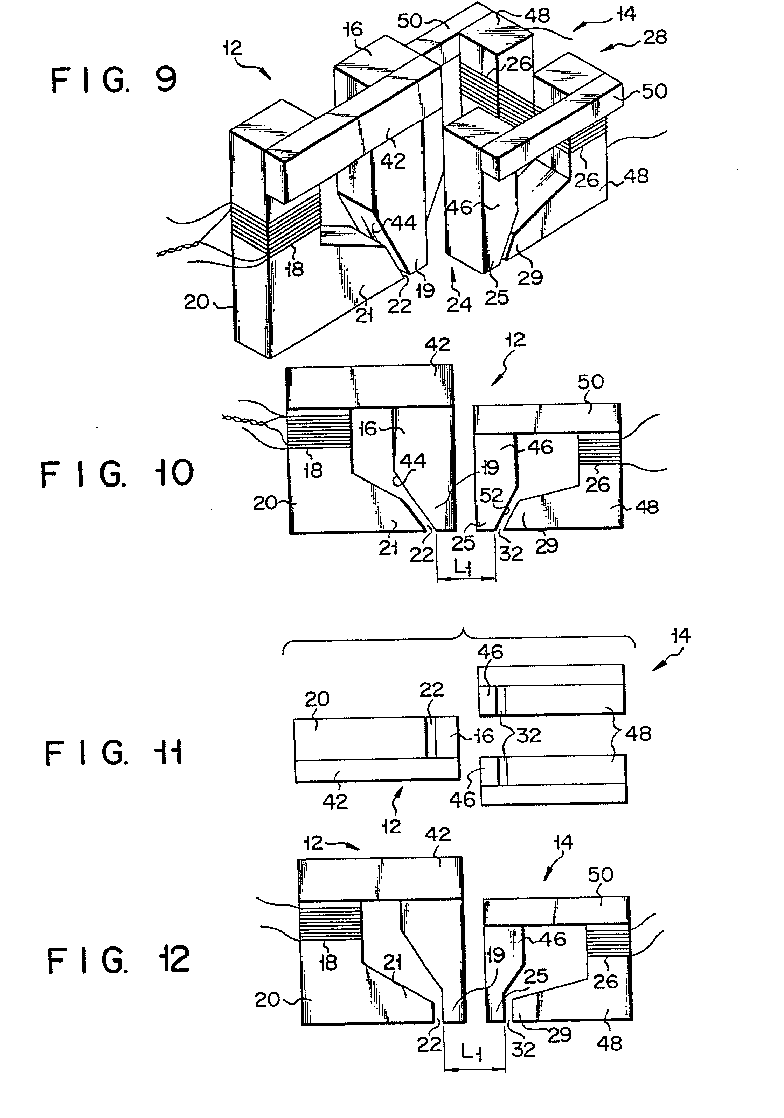

Figs. 9 to 11 show a magnetic head device according to another embodiment of the invention, in which Fig. 9 is a perspective view, Fig. 10 is a side view, and Fig. 11 is a bottom view; and

Fig. 12 is a bottom view of a magnetic head device according to still anoter embodiment of the invention.

Preferred Embodiments of the present invention will now be described in detail with reference to the accompanying drawings.

As shown in Figs. 5 to 7, a magnetic head device 10 is provided with a read/write head 12 and an erasing head 14. The read/write head 12 includes a first recording/reproducing core 16 formed of a single substantially prism-shaped core member, and a second recording/reproducing core 18 having a channel section wound with a coil 18. One end of the second recording/reproducing core 20 is fixed to the upper end portion of the first recording/reproducing core 16, while the other end, which forms a gap defining end portion 21, faces a gap defining end portion 19 or the lower end portion of the core 16 with a predetermined space between them. Two coners of the gap defining end portion 21 of the second core 20 are cut aslant. A read/write gap 22 with a width DW is defined between the respective gap defining end portions 19 and 21 of the first and second cores 16 and 20. As seen from Fig. 6, the first core 16 is tapered downward. Namely, the lateral face 44 of the first core 16 on the side of the second core 20 is inclined at an angle θ to a vertical line.

The erasing head 14 includes a first erasing core 24 formed of a single substantially prism-shaped core member. The core 24 directly faces the first recording/reproducing core 16. The erasing head 14 also includes a second erasing core 28 wound with a coil 26. The second core 28 is formed of a single core member having a channel section. One end of the second core 28 is fixed to the upper end portion of the first core 24, while the other end, which forms a gap defining end portion 29, faces a gap defining portion 25 or the lower end portion of the core 24 with a predetermined space between them. A depression 30 is formed in the center of the gap defining end portion 29 of the second core 28 so that two sections 31 and 33 are formed on both sides of the depression 30, respectively. As seen from Fig. 7a, a pair of erasing gaps 32 with a width EW are defined between the respective gap defining end portions 25 and 29 of the first and second erasing cores 24 and 28. The two erasing gaps 32 are arranged in a staright line and are spaced at a distance equal to the width DW of the read/write gap 22 from each other. The erasing gaps 32 extend substantially parallel to the read/write gap 22. Alternatively, the erasing gaps 32 may be inclined relatively to the read/write gap 22. As seen Fig. 6, the first erasing core 24 is tapered downward. Namely, the lateral face 52 of the first core 24 on the side of the second core 28 is inclined at the angle $\theta$ to a vertical line. The distance Ll between the read/write gap 22 and each erasing gap 32 is about 0.2 mm.

The read/write head 12 and the erasing head 14 are fixed to the same support frame (not shown), and are held in the relative positions shown in Figs. 5 to 7a. Glass material (not shown) is sealed in the read/write gap 22, thus bonding the end portions 19, 21 and also in the erasing gaps 32, thus bonding the end portions 25, 29. The first recording/reproducing core 16 and the first erasing core 24 may be shaped as shown in Fig. 7b. In this modification, the gap defining end portion 25 of the first erasing core 24 has a depression 35 in the center thereof whereby the gap defining end portion is divided into two sections 37, 39. Erasing gaps 32 are defined between individualy the sections 37, 39 and their corresponding sections 31, 33 of the gap defining end portion 29 of the second erasing core 28.

Fig. 8 shows a magnetic disk 34 on which data is recorded by the use of the magnetic head device 10 constructed in the aforesaid manner. A data recording region (data track) 36 with a width substantially equal to the width DW of the read/write gap 22 is formed on the surface of the magnetic disk 34. Data erasing regions 38 and 40 with a width equal to the width EW of the erasing gaps 32 are formed on both sides of the data track 36, respectively. Since the distance Ll between the read/write gap 22 and each erasing gap 32 can be as short as about 0.2 mm, unerased and over-erased regions are very narrow.

According to the magntic head device 10 constructed in this manner, the first recording/reproducing core 16 and the first erasing core 24 are tapered downward. Therefore, the distance Ll between the read/write gap 22

and each erasing gap 32 can be reduced to about 0.2 mm or less, that is, made much shorter than that of the prior art magnetic head device. Thus, the formation of the unerased and over-erased regions may be prevented, and parts of both sides of each data track recorded by the read/write head 12 may accurately be erased. Since the distance Ll is short, moreover, the gaps between sectors in each data track can be narrowed. As a result, the number of sectors in each data track can be increased for a larger recording capacity of the magnetic disk.

Referring now to Figs. 9 to 11, another embodiment of the present invention will be described.

In this second embodiment, a read/write head 12 includes a substantially prism-shaped first recording/reproducing core 16 and a substantially L-shaped second recording/reproducing core 20. These two cores 16 and 20 are coupled by means of a coupling member 42. A read/write gap 22 is defined between a gap defining end portion 19 of the first core 16 and a gap defining end portion 21 of the second core 20. A taper 44 is formed on the gap 22 side face of the gap defining end portion 19 of the first core 16, that is, the gap defining end portion 19 is tapered.

A first erasing core 24 of an earsing head 14 includes a pair of substantially prism-shaped first core members 46, while a second erasing core 28 includes a pair of substantially L-shaped second core members 48. The upper end portion of each first core member 46 is coupled with that of its corresponding second core member 48 by means of a coupling member 50. The lower end portion or a gap defining end portion 29 of each second core member 48 directly faces that or a gap defining end portion 25 of its corresponding first core member 46. Thus, an erasing gap 32 is defined between the gap defining end portions 25 and 29. A taper 52 is formed on the gap 32 side face of the gap defining end portion 25 of each first core member 46, that is, the gap defining end portion 25 is tapered. As seen from Fig. 11, the relative positions of the read/write gap 22 and each erasing gap 32 are the same as those of the first embodiment described above.

In the magnetic head device constructed in this manner, the respective gap defining end portions of the first read/write core and each first core member are tapered, so that the distance L1 between the read/write gap 22 and each erasing gap 32 may be made much shorter than that of the prior art magnetic head device. Thus, this second embodiment may produce the same effect as the first embodiment.

It is to be understood that the present invention is not limited to the aforementioned embodiments, and that various changes and modifications may be effected therein by one skilled in the art without departing from the scope or spirit of the invention. It is necessary only that the lower end portions or gap defining end portions of the first recording/reproducing core and the first erasing core(s) be tapered, as shown in Fig. 12, for example. The first recording/reproducing core must not, however, be narrowed from top to bottom, since an entirely narrow first recording/reproducing core is not easy to work, and lacks in strength. The shapes of the second recording/reproducing core and the second erasing core(s) may be changed as required.

Claims:

1.  A magnetic head device comprising:

a read/write head for recording on or reproducing information from a magnetic recording medium, said read/write head including a first recording/reproducing core having a gap defining end portion, a second recording/reproducing core having a gap defining end portion directly facing the gap defining end portion of the first recording/reproducing core, and a read/write gap defined between the respective gap defining end portions of the first and second recording/reproducing cores; and

an erasing head for erasing parts of both side portions of each of data tracks recorded on the magnetic recording medium by the read/write head, said erasing head including a first erasing core adjoining the first recording/reproducing core and having a gap defining end portion, a second erasing core having a gap defining end portion directly facing the gap defining end portion of the first erasing core, and a pair of erasing gaps defined between the respective gap defining end portions of the first and second erasing cores, said two erasing gaps being spaced from each other at a distance substantially equal to the width of the read/write gap; characterized in that:

at least one of the respective gap defining end portions (19, 25) of the first recording/reproducing core (16) and the first erasing core (24) are tapered.

2.  The magentic head device according to claim 1, characterized in that a taper portion (44 or 52) is formed on at least one of the lateral face of the gap defining end portion (19) of said first recording/reproducing core (16) on the read/write gap side and the lateral face of the gap defining end portion (25) of said first erasing core (24) on the erasing gap side.

3. The magnetic head device according to claim 1, characterized in that the respective gap defining end portions (19, 25) of said first recording/reproducing core (16) and said first erasing core (24) are tapered.

4. The magnetic head device according to claim 3, characterized in that the gap defining end portion (19) of said first recording/reproducing core (16) has a taper portion (44) on the read/write gap (22) side face thereof, and the gap defining end portion (25) of said first erasing core (24) has a taper portion (52) on the erasing gap (32) side face thereof.

5. The magnetic head device according to claim 4, characterized in that said first erasing core (24) includes a pair of substantially prism-shaped first core members (46) one end portions of which form said gap defining end portion (25) of the first erasing core, and said second erasing core (28) includes a pair of second core members (48) one end portions of which form said gap defining end portion (29) of the second erasing core, said erasing gaps (32) being defined between the respective gap defining end portions of the first and second core members.

6. The magentic head device according to claim 4, characterized in that said first erasing core (24) is formed of a single substantially prism-shaped core member one end portion of which forms said gap defining end portion (25) of the first erasing core, and said second erasing core (28) is formed of a single core member one end portion of which forms said gap defining end portion (29) of the second erasing core, the gap defining end portion of said second erasing core having a depression (30) in the center thereof whereby said gap defining end portion is divided into two sections (31, 33) so that the erasing gaps (32) are defined between the two sections and the gap defining end portion of the first erasing core.

7. The magnetic head device according to claim 6, characterized in that said gap defining end portion (25) of the first erasing core (24) has a depression (35) in the center thereof whereby said gap defining end portion is divided into two sections (37, 39) so that said erasing gaps (32) are defined individually between the sections (37, 39) of the gap defining end portion of the first erasing core and their corresponding sections (31, 33) of the gap defining end portion (29) of the second erasing core (28).

8. The magentic head device according to claim 3, characterized in that a distance (L1) between said read/write gap (22) and each erasing gap (32) is about 0.2 mm.

# FIG. 1

# FIG. 2

# FIG. 3

F I G. 4

0115052

0115052

# FIG. 5

# FIG. 6

FIG. 7A

FIG. 7B

FIG. 8

0115052

**FIG. 9**

**FIG. 10**

**FIG. 11**

**FIG. 12**